# DEMANDE DE BREVET EUROPEEN

(11) **EP 1 006 319 A1**
(43) Date de publication de la demande: **07.06.2000**
(21) Numéro de dépôt: 99470023.5
(22) Date de dépôt: 01.12.1999
(51) Int. Cl.: F24F 13/22, G01F 23/18

(54) **Dispositif d'évacuation des condensats**

(30) Priorité: 02.12.1998 FR 9815379
(71) Demandeur: Société des Applications Aérauliques et Thermiques Industrielles et Commerciales, 57300 Hagondange (FR)
(72) Inventeur: Pages, Yves, 57000 Metz (FR)
(74) Mandataire: Ballot, Paul Denis Jacques

(57) **Abrégé**

Un dispositif d'évacuation des condensats (35) d'une installation de climatisation comprend une pompe (19) commandée par une platine de commande (14) reliée à un capteur (4) piézo-résistif. Le capteur (4) intégré à un réservoir (2) mesure une pression des condensats (35) dans un bac de récupération des condensats pour que la platine de commande (14) détermine le niveau atteint et gère le fonctionnement de la pompe (19) et de l'installation de climatisation.

## Description

La présente invention concerne un ensemble de relevage destiné aux systèmes de conditionnement d'air, ou systèmes de climatisation.

Les systèmes de climatisation comportent des batteries de traitement d'air composées d'un groupe de ventilation qui souffle de l'air à travers une batterie d'échange thermique parcourue par un fluide froid lorsque l'appareil est utilisé en rafraîchissement. Le refroidissement de l'air qui en résulte provoque la formation de condensats qui sont recueillis dans un bac prévu à cet effet et placé sous la batterie d'échange. Ces condensats sont essentiellement de l'eau. Généralement, l'eau collectée est évacuée par une canalisation par effet de gravité. Dans de nombreuses configurations, l'écoulement gravitaire n'est pas possible en raison de l'absence de la hauteur nécessaire et l'on a recours à l'utilisation d'une pompe de relevage.

Un dispositif de relevage de condensats comprend en général une pompe, un filtre monté en amont de la pompe, un système de détection et un système de commande. La pompe est branchée sur une canalisation issue du bac, ou est placée directement dans le bac pour aspirer l'eau contenue dans le bac. Le système de détection détermine le niveau atteint par l'eau dans le bac et transmet cette information au système de commande. Le système de détection peut-être basé sur un flotteur qui suit la variation du niveau de l'eau et actionne des contacts électriques à des niveaux prédéterminés. Ce peut être également un ensemble de détecteurs sensibles à la conductivité électrique de l'eau. Un détecteur de ce type est placé à un niveau prédéterminé dans le bac. Lorsque l'eau atteint ce niveau, elle mouille le détecteur qui mesure alors une conductivité plus importante qu'en l'absence d'eau. La mesure est amplifiée et comparée à un seuil pour déterminer la présence ou l'absence d'eau au niveau prédéterminé. Cette information de présence ou d'absence d'eau est transmise au système de commande.

Le système de détection peut être également un ensemble de détecteurs sensibles à la conductivité thermique. Le document EP-A2-0552913 révèle un tel système de détection. Les détecteurs sont des sondes résistantes à coefficient de température positif (PTC) qui, lorsque le système de détection est en service, sont alimentées par un courant électrique. Sous l'effet de ce courant, les sondes augmentent de température et donc de résistance. Lorsqu'une sonde est immergée dans l'eau, la chaleur est diffusée dans l'eau, la température de la sonde diminue, et sa résistance également. Les variations de résistance sont détectées par un circuit électronique qui détermine ainsi la présence ou l'absence d'eau à un niveau déterminé par la position de la sonde.

Classiquement, trois niveaux d'eau sont déterminés : un niveau bas, un niveau haut et un niveau d'alarme. Le système de commande reçoit les informations de niveau depuis le système de détection et détermine le fonctionnement de la pompe et du système de conditionnement d'air, par exemple par l'intermédiaire de relais électriques. Lorsque l'eau dépasse le niveau haut, la pompe est mise en route jusqu'à ce que le niveau bas soit atteint. La pompe est alors arrêtée. Si l'eau atteint le niveau d'alarme, la pompe et le système de conditionnement d'air sont arrêtés. En effet, on considère qu'une anomalie est apparue : la pompe ne débite plus.

Les systèmes actuels comportent quelques inconvénients. Les capteurs à flotteurs sont des systèmes mécaniques qui sont susceptibles de se bloquer en position haute ou basse, en particulier par l'intrusion d'éléments solides divers. Il en résulte un dysfonctionnement de l'évacuation des condensats qui peut conduire à un débordement du bac et ainsi à un sinistre de gravité variable. De même, les détecteurs de conductivité électrique sont sensibles à des variations de la composition physico-chimique de l'eau et en conséquence de la conductivité intrinsèque de l'eau. Il en résulte des dysfonctionnements de la détection des niveaux et donc de l'évacuation de l'eau. Les détecteurs de conductivité thermique sont sensibles aux éléments étrangers qui peuvent venir entourer les sondes et perturber la conductivité thermique.

Lorsque l'humidité de l'air est importante, il se peut que la quantité produite de condensats soit plus importante que la capacité d'évacuation de la pompe. Le niveau d'alarme est alors atteint et le système de conditionnement d'air est arrêté. Par ailleurs, lorsque le système de conditionnement d'air est arrêté par un utilisateur alors que le niveau haut est presque atteint, l'eau présente à la surface de la batterie d'échange continue à ruisseler dans le bac, de telle sorte que le niveau d'alarme peut être atteint. Dans ce cas, lors d'une nouvelle mise en route du système de conditionnement d'air par l'utilisateur, le fonctionnement sera interdit par le système de commande jusqu'à une intervention manuelle pour vider le bac et amener le niveau d'eau au-dessous du niveau d'alarme.

La présente invention vise à remédier à ces problèmes en proposant un dispositif de relevage des condensats comportant un système de détection de niveau très peu sensible aux diverses pollutions des condensats, avec un système de commande qui évite les arrêts intempestifs du système de conditionnement d'air, avec un filtre qui pourra être facilement accessible.

L'invention a pour objet un dispositif de relevage des condensats collectés dans un bac pour un système de conditionnement d'air, le dispositif de relevage comportant une pompe pour relever les condensats par l'intermédiaire d'un circuit hydraulique, la pompe étant commandée par une platine de commande recevant un signal depuis un système de détection de niveau des condensats, caractérisé en ce que le signal est délivré par un capteur de pression différentielle piézo-résistif, le signal représentant une différence de pression entre la pression des condensats à un niveau inférieur du bac et la pression atmosphérique, le système de détection comportant une chambre qui évite le contact entre les condensats et le capteur.

Grâce à l'invention, le système de détection est isolé des condensats par un matelas d'air contenu dans la chambre. La pression des condensats s'exerce sur la partie inférieure du matelas d'air et est transmise au capteur de pression différentielle. Cette pression est proportionnelle à la hauteur d'eau dans le bac. La mesure de cette pression est donc représentative du niveau atteint par les condensats dans le bac. Comme le capteur est isolé des condensats, il n'est pas perturbé dans son fonctionnement par des éléments qui pourraient venir à proximité du capteur, comme c'est le cas des capteurs à flotteur ou à conductivité électrique ou thermique.

Le capteur comprend un corps annulaire qui supporte une membrane en forme de disque. La membrane est par exemple en silicium ou en céramique. Les pressions sont exercées de part et d'autre de la membrane de telle sorte qu'une différence de pression entraîne une faible déformation de la membrane. Cette dernière comporte à sa surface des jauges de contraintes qui suivent les déformations de la membrane. La résistance des jauges de contrainte varie en fonction de leur déformation. Selon une technique bien connue, les jauges de contraintes sont montées en pont alimenté par une tension d'alimentation. Le signal issu du pont est une tension proportionnelle à la différence de pression.

De manière préférentielle, le système de détection comporte un réservoir mis à la pression atmosphérique par un évent. De cette manière, la différence de pression est mesurée uniquement au niveau du système de détection, en étant à l'abri des variations de pression qui peuvent être générées par le système de conditionnement d'air.

Selon d'autres caractéristiques, la platine de commande compare le signal à des seuils croissants, respectivement un seuil bas, un seuil haut et un seuil d'alarme correspondant respectivement à un niveau bas, un niveau haut et un niveau d'alarme des condensats dans le bac, et quand le seuil d'alarme est dépassé, la platine de commande interdit le fonctionnement du système de conditionnement d'air par l'intermédiaire d'un relais d'alarme et fait fonctionner la pompe pendant une durée prédéterminée.

Ainsi, dans le cas où le bac serait rempli au-dessus du niveau d'alarme à la mise sous tension du système de conditionnement d'air, le fonctionnement de la pompe pendant une durée prédéterminée permet de faire descendre le niveau d'eau au-dessous du seuil d'alarme et de remettre le système de conditionnement d'air en fonctionnement. De même, quand le niveau d'alarme est atteint à cause d'une importante production de condensats due à une forte hygrométrie, l'arrêt du système de conditionnement d'air permet de diminuer la production de condensats pendant que la pompe continue à vider le bac. Comme précédemment, une fois que le niveau d'eau est au-dessous du niveau d'alarme, le système de conditionnement d'air est remis en route. Cette caractéristique évite ainsi des arrêts intempestifs durables du système de conditionnement d'air. La durée prédéterminée est évaluée pour permettre d'évacuer le contenu du bac.

Selon d'autres caractéristiques :
- le relais d'alarme commande l'arrêt du système de conditionnement d'air lorsqu'il est au repos. Ainsi, si le relais n'est pas alimenté à cause d'un dysfonctionnement, le fonctionnement du système de conditionnement d'air est empêché, ce qui évite que des condensats qui ne pourraient être évacués ne soient formés. Le dysfonctionnement peut-être une panne d'alimentation du dispositif de relevage ou un fusible fondu, par exemple.
- le circuit hydraulique comporte un filtre en amont de la pompe incorporé avec la pompe dans un ensemble pompe. Il est ainsi possible d'implanter le capteur à proximité du bac et de placer la pompe avec le filtre à un endroit accessible pour les opérations de maintenance.
- le filtre se déconnecte de l'ensemble pompe par simple traction. La maintenance se trouve facilitée. Le filtre une fois déconnecté peut-être nettoyé puis remis en place, ou remplacé par un filtre neuf.
- en cas d'échauffement de la pompe, l'arrêt de la pompe et du système de conditionnement d'air est commandé par la platine de commande jusqu'à ce qu'un réarmement manuel intervienne.

L'invention sera mieux comprise et d'autres particularités et avantages apparaîtront à la lecture de la description qui va suivre, la description faisant référence aux dessins annexés parmi lesquels :
- la figure 1 représente le système de détection en vue de face ;
- la figure 2 représente le système de détection suivant coupe AA de la figure 3 ;
- la figure 3 représente le système de détection vu de gauche ;
- la figure 4 représente le filtre en coupe selon la ligne BB de la figure 7 ;
- la figure 5 représente l'ensemble pompe en vue de face ;
- la figure 6 représente l'ensemble pompe suivant la coupe BB ;
- la figure 7 montre l'ensemble pompe vu de gauche ;
- la figure 8 montre le schéma de principe de la platine de commande.

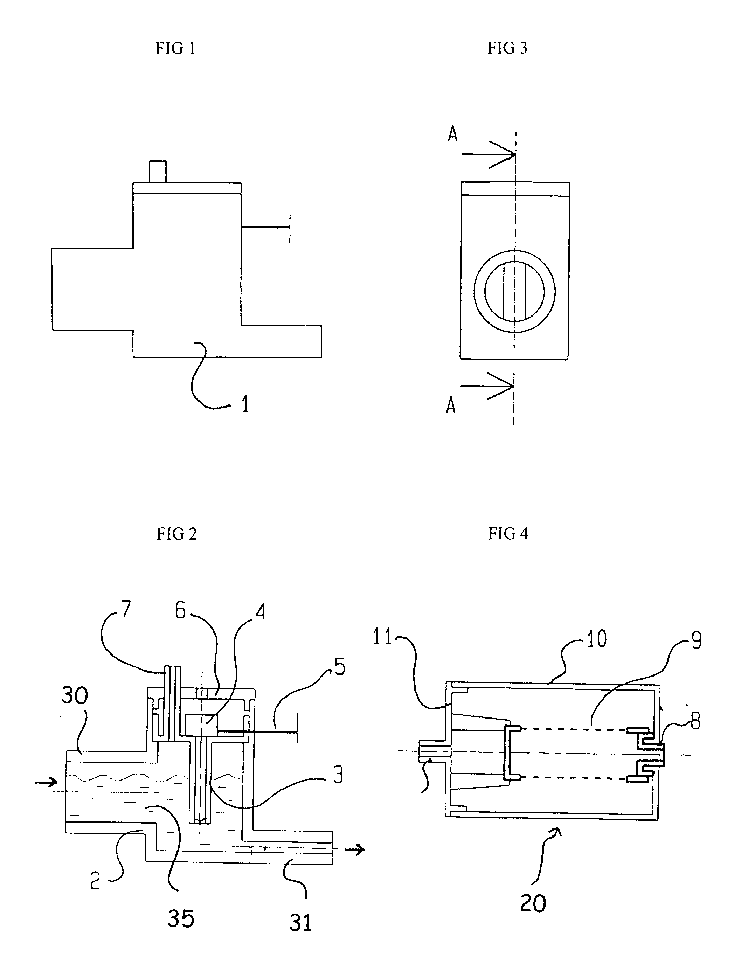

Les figures 1, 2 et 3 montrent le système de détection 1 suivant l'invention. On y distingue un réservoir 2 qui reçoit l'eau d'un bac (non représenté) de condensats 35 par un embout d'arrivée 30 et permet d'évacuer l'eau vers un ensemble pompe 34 par un embout de sortie 31. La mesure de pression s'effectue à l'aide d'un capteur de pression 4 du type piézo-résistif monté de façon étanche sur la partie supérieure de la chambre 3 sans contact direct avec le fluide en raison du matelas d'air emprisonné dans la chambre 3. Le capteur de pression est raccordé sur un câble de liaison 5 qui permet la transmission d'une tension de sortie proportionnelle à la pression d'eau mesurée. Un couvercle 6 protège le capteur de pression et un perçage dans ce couvercle permet de transmettre la pression atmosphérique au capteur. Un tube d'évent 7 est utilisé comme mise à l'air libre du réservoir 2. Il est possible de le prolonger par un tuyau pour augmenter le niveau admissible de l'eau.

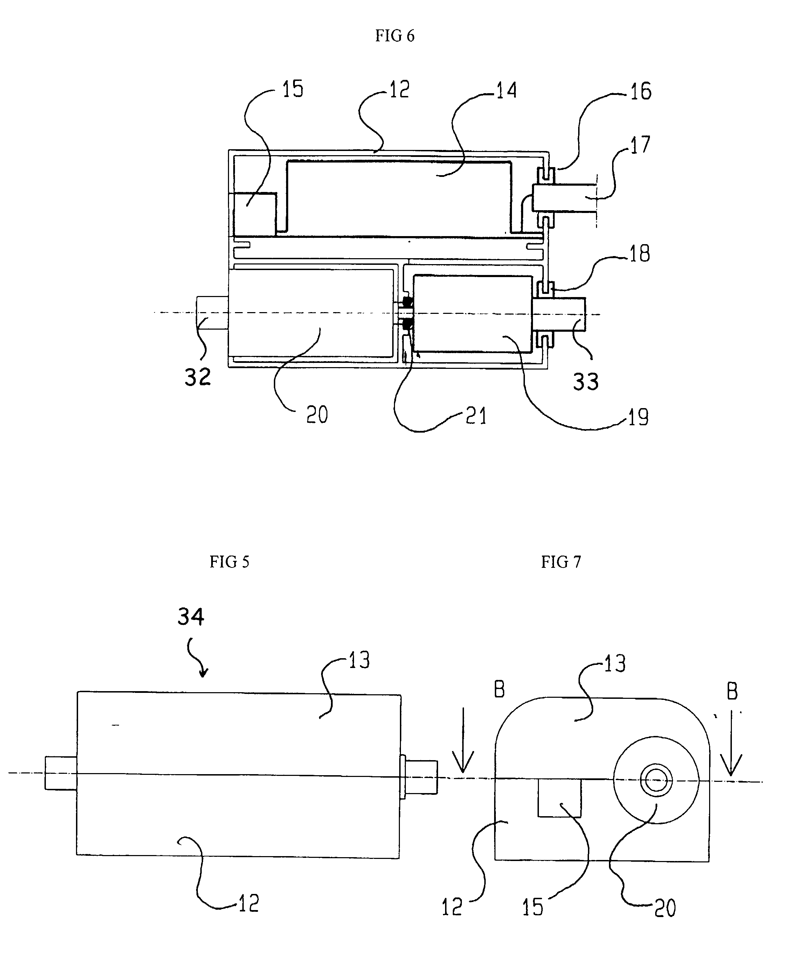

La figure 4 montre un filtre 20 en coupe, lequel est incorporé dans un ensemble pompe suivant figure 6. Le filtre comporte un embout souple qui s'emboîte sur l'aspiration d'une pompe 19. Il comporte un élément filtrant perforé 9 incorporé dans le corps de filtre 10 et fixé au moyen d'un couvercle de filtre 11. L'eau en provenance du système de détection 1 est conduite par un tuyau non représenté vers un embout 32 du couvercle de filtre 11. La figure 5 représente l'ensemble pompe 34 en vue de face, comportant un socle 12 et un couvercle de pompe 13. Sur la figure 6, on distingue le filtre 20 connecté à la pompe 19 supportée par l'intermédiaire d'un joint torique 21 et d'un joint 18. Ces joints ont pour rôle de limiter la transmission de vibrations. Le filtre 20 se déconnecte aisément de l'ensemble pompe par simple traction sur l'embout 32. Une platine de commande 14 comporte un connecteur 15 sur lequel le câble de liaison 5 se raccorde, ainsi qu'une connexion d'un câble d'alimentation 17 entrant dans l'ensemble pompe par l'intermédiaire d'un passe-fils surmoulé 16.

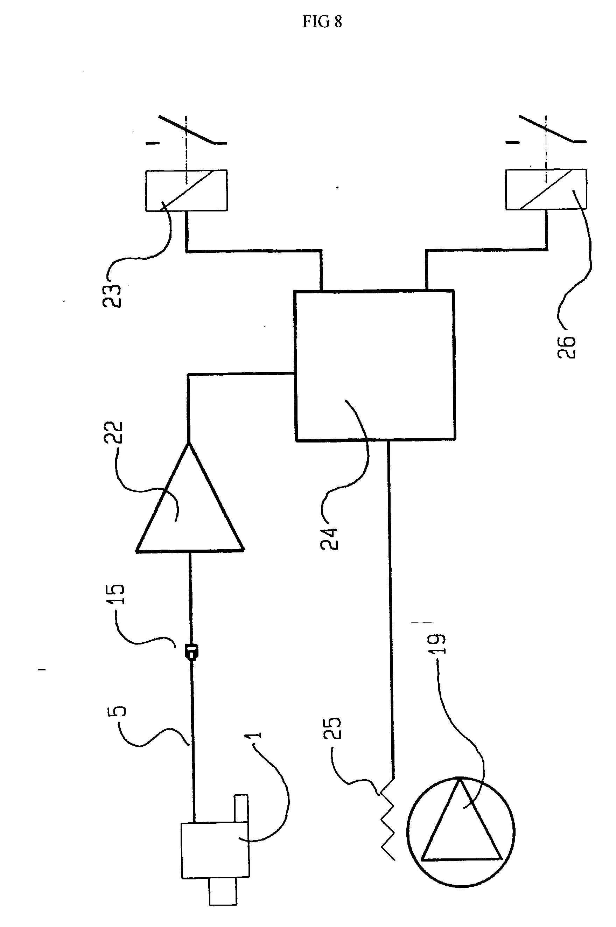

La figure 8 illustre le traitement effectué par la platine de commande sur le signal délivré par le capteur de pression 4. Ce signal est transmis par l'intermédiaire du câble de liaison 5 et du connecteur 15 à un amplificateur 22. La tension issue de l'amplificateur 22 est transmise à un microprocesseur 24 qui assure la numérisation de la tension analogique délivrée par l'amplificateur 22. Le microprocesseur 24 reçoit également une mesure de température effectuée au moyen d'une sonde de température 25 placée sur le corps de la pompe 19. Le microprocesseur 24 assure la mise en service et l'arrêt du système de conditionnement d'air par l'intermédiaire du relais d'alarme 23, ainsi que la mise en service ou l'arrêt de la pompe 19 par l'intermédiaire du relais 26. Il comporte des moyens de programmation de trois seuils croissants qu'il compare à la tension reçue de l'amplificateur. Les trois seuils, à savoir un seuil bas, un seuil haut, et un seuil d'alarme, peuvent être programmés en fonction de la position du capteur en hauteur par rapport au bac et correspondent respectivement à un niveau bas, un niveau haut et un niveau d'alarme de l'eau dans le bac. Le microprocesseur 24 assure également une surveillance de la température de la pompe. Si le corps de la pompe atteint une température trop élevée, le système de climatisation et la pompe sont arrêtés jusqu'à ce qu'un réarmement intervienne. Ce peut être un bouton incorporé à la platine de commande, ou un arrêt suivi d'une remise sous tension du dispositif de relevage. Le microprocesseur permet enfin de réaliser toutes les fonctions précédemment décrites, soit l'alimentation, et ainsi l'enclenchement du relais d'alarme 23 lorsque la tension d'alimentation est présente, que la température de la pompe est inférieure à la valeur maximale admise, que le signal est inférieur au niveau d'alarme, ainsi que la mise en service de la pompe 19 par le relais 26 lorsque le signal a atteint le seuil haut, son arrêt lorsque le signal a atteint le seuil bas, l'arrêt différé de la pompe 19 lorsque le signal dépasse le seuil d'alarme.

A titre d'exemple, les différents niveaux requis peuvent être respectivement de 5 mm pour le niveau bas ou niveau d'arrêt de la pompe, de 15 mm pour le niveau haut et 20 mm pour le niveau d'alarme.

Les dimensions géométriques des deux ensembles, constituant la pompe de relevage suivant l'invention son particulièrement réduites. A titre d'exemple, le système de détection a pour dimensions maximales une longueur de 48 mm, une hauteur de 33 mm et une largeur de 28 mm. L'ensemble pompe a pour dimensions une longueur de 96 mm, une largeur de 68 et une hauteur de 48mm. Le dispositif de relevage suivant l'invention trouve son application dans toutes les installations de traitement d'air ou le relevage des condensats s'avère nécessaire. Il est particulièrement destiné aux installations de confort comprenant des climatiseurs à détente directe, également aux installations mettant en oeuvre des ventilos-convecteurs ou unités de traitement d'air de type cassettes plafonnières. Il est également destiné aux unités de traitement d'air de type gainables. Il trouve son application dans la majorité des cas rencontrés.

## Revendications

1. Dispositif de relevage des condensats collectés dans un bac pour un système de conditionnement d'air, le dispositif de relevage comportant une pompe (19) pour relever les condensats (35) par l'intermédiaire d'un circuit hydraulique, la pompe (19) étant commandée par une platine de commande (14) recevant un signal depuis un système de détection (1) de niveau des condensats, caractérisé en ce que le signal est délivré par un capteur (4) de pression différentielle, le signal représentant une différence de pression entre la pression des condensats à un niveau inférieur du bac et la pression atmosphérique, le système de détection (1) comportant une chambre (3) qui évite le contact entre les condensats (35) et le capteur (4).

2. Dispositif de relevage selon la revendication 1, caractérisé en ce que le système de détection (1) comporte un réservoir (2) mis à la pression atmosphérique par un évent (7).

3. Dispositif de relevage selon la revendication 1, caractérisé en ce que la platine de commande (14) compare le signal à des seuils croissants, respectivement un seuil bas, un seuil haut et un seuil d'alarme correspondant respectivement à un niveau bas, un niveau haut et un niveau d'alarme des condensats dans le bac, et quand le seuil d'alarme est dépassé, la platine de commande (14) interdit le fonctionnement du système de conditionnement d'air par l'intermédiaire d'un relais d'alarme (23) et fait fonctionner la pompe (19) pendant une durée prédéterminée.

4. Dispositif de relevage selon la revendication 3, caractérisé en ce que la platine de commande (14) comporte des moyens d'ajustement du seuil bas, du seuil haut et du seuil d'alarme.

5. Dispositif de relevage selon la revendication 3, caractérisé en ce que le relais d'alarme (23) lorsqu'il est au repos commande l'arrêt du système de conditionnement d'air.

6. Dispositif de relevage selon la revendication 1, caractérisé en ce que le circuit hydraulique comporte un filtre (20) en amont de la pompe (19) incorporé avec la pompe dans un ensemble pompe (34).

7. Dispositif de relevage selon la revendication 6, caractérisé en ce que le filtre (20) se déconnecte de l'ensemble pompe par simple traction.

8. Dispositif de relevage selon la revendication 1, caractérisé en ce que, en cas d'échauffement de la pompe (19) l'arrêt de la pompe et du système de conditionnement d'air est commandé par la platine de commande (14) jusqu'à ce qu'un réarmement manuel intervienne.
